# FASCICULE DE BREVET EUROPEEN

(11) **EP 1 428 458 B1**
(45) Date de publication et mention de la délivrance du brevet: **26.10.2005**
(21) Numéro de dépôt: 02447245.8
(22) Date de dépôt: 05.12.2002
(51) Int. Cl.: A47C 7/26

(54) **Complexe multicouche destiné à la réalisation d'une nappe anti-vandalisme multi-usage**
Mehrschichtiger Komplex für eine Vandalismus schützenden Einlage
Multilayer complex for the provision of an anti-vandalism material

(43) Date de publication de la demande: 16.06.2004
(73) Titulaire: INTHERTRONICA S.A., 4031 Liège (BE)
(72) Inventeur: Brousse, Jean-Marie, 11000 Carcassonne (FR); Fryns, Guillaume, 4317 Faimes (BE); Garray, Didier, 4357 Donceel (BE); 'S Heeren, Phillippe, 4280 Hannut (BE)
(74) Mandataire: Van Malderen, Michel

(56) Documents cités:
- EP-A- 0 190 064
- DE-A- 3 711 419
- FR-A- 2 522 027
- GB-A- 2 327 379
- US-A- 5 709 920

## Description

### Objet de l'invention

La présente invention se rapporte à une nappe anti-vandalisme destinée à offrir une protection contre le percement et la découpe par des objets pointus et coupants. Elle s'attache plus particulièrement au renforcement de complexes multicouches à usages multiples et en particulier à des bâches anti-vandalisme et anti-effraction.

### Etat de la technique et introduction

Il existe de très nombreux domaines dans lesquels on peut utiliser des complexes multicouches munis d'une nappe anti-vandalisme. Parmi ceux-ci, on peut citer sans être limitatif, des bâches de camion, les pavillons de toiture amovibles pour voitures, des gilets de protection, les bâches pour le transport ferroviaire, les bâches pour tentes et chapiteaux, les valises de transport, des portes à ouverture rapide pour les hangars de stockage, des cloisons de protection, des housses de siège, etc.

L'invention est née du constat que les véhicules de transport de personnes et de marchandises faisaient souvent l'objet d'actes de vandalisme consistant à lacérer les sièges ou les bâches de camion au couteau ou au cutter, ce qui donne lieu à des coûts considérables en termes de vol de marchandise ou de détérioration de biens publics.

Actuellement, les marchandises de consommation sont pour la plupart transportées dans des remorques à parois flexibles formées par des bâches tendues en PVC très vulnérables au cutter et au couteau. Il arrive que les remorques restent plusieurs heures sur des parkings sans surveillance, ce qui en fait des proies faciles pour les voleurs et les vandales. De surcroît, un trou dans une bâche est punissable au passage des frontières, ces trous peuvent en effet donner lieu à un trafic illégal de marchandises à l'insu du camionneur.

Par ailleurs, l'utilisation de bâches souples présente une série d'avantages pour leurs utilisateurs. Si la nécessité de souplesse peut paraître évidente pour des recouvrements de sièges, des portes à ouverture rapide ou encore des bâches de tentes, elle est également nécessaire pour les bâches de camion car elles sont amovibles facilement, permettent des manipulations latérales sur les camions et les wagons de chemin de fer ainsi qu'une certaine aération de la marchandise à transporter tout en la protégeant de l'eau de pluie. Les inventeurs ont donc voulu conserver ces avantages qui constituent d'ailleurs souvent la principale raison d'être de ces complexes multicouches tout en les protégeant contre le type de vandalisme évoqué plus haut.

La recherche de solutions aux actes de vandalisme par l'utilisation de renforts a par le passé été abordée via la problématique du vandalisme sur les sièges dans les transports publics.

La demande de brevet français n° 2592334 divulgue une feuille composite pour le revêtement des sièges dans les transports publics qui comporte un revêtement résistant à l'usure muni d'une couche intérieure de tricot ou treillis métallique résistant aux lacérations et au poinçonnage.

Une autre demande de brevet français n° 2447161 propose un complexe multicouche comprenant un treillis métallique et une matière plastique souple relativement épaisse et élastique. Dans ce cas particulier, le renfort métallique consiste en une nappe de ressorts à spire métallique semblable à celle utilisée dans les sommiers métalliques.

Le brevet américain n° 5,770,530 divulgue également un complexe multicouche utilisé dans les sièges comprenant un élément central résistant au poinçonnement et aux coupures de couteau constitué de fibres de polyamide et de polyéthylène ainsi que de fibres de verre, ce complexe multicouche comprend également des non-tissés ainsi que des fils métalliques gainés et enroulés en forme de spirale.

Enfin, la demande de brevet français n° 2715546 divulgue un complexe destiné à la réalisation de sièges et de dossiers dans lequel on utilise une armature métallique reliée à des fils de polyamide généralement placés au sein d'un complexe multicouche.

Tous ces tissus anti-vandalisme sont généralement conçus pour offrir à la fois une résistance au percement ainsi qu'une résistance à la coupure mais sont souvent trop rigides. Par ailleurs dans le cadre spécifique, de la problématique du transport international, les bâches doivent essentiellement être protégées contre la découpe, le percement par une pointe étant un problème secondaire dans la mesure où il se limite à un petit trou et où il ne permet pas la découpe complète de la bâche et ainsi l'accès aux marchandises ou une intrusion.

Il s'est également avéré que les renforts utilisés dans les documents de l'art antérieur ne résistent généralement pas à des tentatives de détérioration, se passant à l'abri des regards, par l'utilisation de couteaux solides prévus à cet effet.

En règle générale, on peut d'ailleurs considérer que lorsque les fils de trame sont reliés par des fils de chaîne en filament ou en fibres de matière plastique, ceux-ci sont vulnérables à la découpe dans le sens perpendiculaire à celles-ci.

### Buts de l'invention

La présente invention vise à proposer un complexe multicouche anti-vandalisme et anti-effraction flexible comprenant une nappe métallique de renfort très résistante à la découpe et ne possédant pas de direction de découpe privilégiée.

### Résumé de l'invention

La présente invention a pour objet de divulguer un complexe multicouche comprenant une nappe métallique de renfort réalisée par entrelacement, comprenant un fil de trame et un fil de chaîne caractérisé en ce que le fil de trame possède une section carrée ou rectangulaire et présente des ondes régulières de forme trapézoïdale situées dans un même plan et en ce que les fils de chaîne reliant les fils de trame se présentent côte à côte et ont une section carrée, rectangulaire ou ronde et en ce que ceux-ci forment une intersection avec le fil de trame au sommet des ondulations en passant alternativement en dessous et au-dessus du fil de trame.

Dans un second mode d'exécution préféré, le fil de trame forme des ondulations régulières en forme de sinusoïde.

Selon l'invention, les métaux utilisés pour les fils de chaîne et les fils de trame sont sélectionnés parmi le groupe de l'acier, l'acier inoxydable, l'acier galvanisé, l'aluminium et le titane.

Avantageusement, les fils de chaîne reliant les fils de trame se présentent par assemblages de 2 à 10 fils côte à côte.

Toujours selon l'invention, les fils de chaîne reliant les fils de trame ont un diamètre ou un côté compris entre 0.1 et 0.6 mm.

Par ailleurs, les fils de trame ont un côté compris entre 0.6 et 1.4 mm

L'invention montre aussi que les fils de trame sont au nombre de 3 à 15 au cm et de préférence au nombre de 5 à 12 au cm.

Enfin, l'invention divulgue l'utilisation du complexe multicouche caractérisé plus haut pour le renforcement de bâches en général et en particulier les bâches utilisées pour le transport international, les portes à ouverture rapide des hangars de stockage, les sièges, les housses de siège, les toits ouvrants de voitures et les tentes.

### Brève description des figures

La figure 1 représente une vue macroscopique de la nappe métallique selon l'invention comportant 8 fils de trame carrés pliés de manière trapézoïdale de 0.6 mm de largeur au cm de nappe reliés par 10 fils de chaîne à section ronde de 0.15 mm.

La figure 2 représente une vue de détail de la nappe métallique comportant 4 fils de trame carrés pliés de manière trapézoïdale de 1.4 mm de largeur au cm de nappe reliés par 4 fils de chaîne d'une section ronde de 0.4 mm.

La figure 3 représente une vue de détail de la nappe métallique comportant 8 fils de trame carrés pliés de manière trapézoïdale de 0.6 mm de largeur au cm de nappe reliés par 10 fils de chaîne à section ronde de 0.15 mm.

La figure 4 représente une vue d'une nappe faisant l'objet de la présente invention comportant 6 fils de trame carrés pliés de manière trapézoïdale de 0.9 mm de largeur au cm de nappe reliés par 6 fils de chaîne d'une section carrée de 0.3 mm.

La figure 5 représente une vue de détail d'une nappe métallique comprenant 6 fils de trame pliés de manière sinusoïdale reliés par 6 fils de chaîne de section ronde de 0.2 mm

La figure 6 représente une vue en coupe d'un complexe multicouche anti-vandalisme pouvant être appliqué sur une bâche de camion.

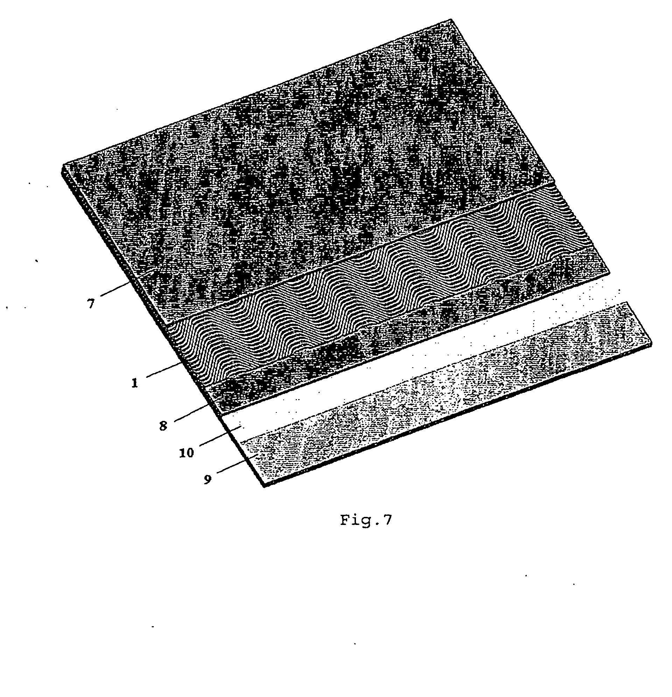

La figure 7 représente une vue en coupe d'un complexe multicouche appliqué sur une bâche classique.

### Description détaillée de l'invention

L'introduction d'une armature métallique quelconque au sein d'un complexe multicouche rigidifie très fortement celui-ci. Il convient donc de trouver une nappe métallique possédant une souplesse suffisante.

Par ailleurs certains fils d'acier à section ronde utilisés sont peu efficaces dans la mesure où les pointes de couteau ont tendance à glisser sur leur surface arrondie et à entraîner ainsi un percement qui constitue souvent le début d'une entaille plus large, surtout s'il existe au sein du renfort une direction de découpe privilégiée.

Les inventeurs ont constaté qu'en utilisant des fils de trame de section carrée ou rectangulaire, les pointes de couteaux étaient arrêtées de façon nette car elles n'ont pas tendance à glisser comme c'est le cas pour les surfaces arrondies et se calent immédiatement dans le métal ce qui empêche généralement que l'entaille ainsi amorcée puisse s'étendre.

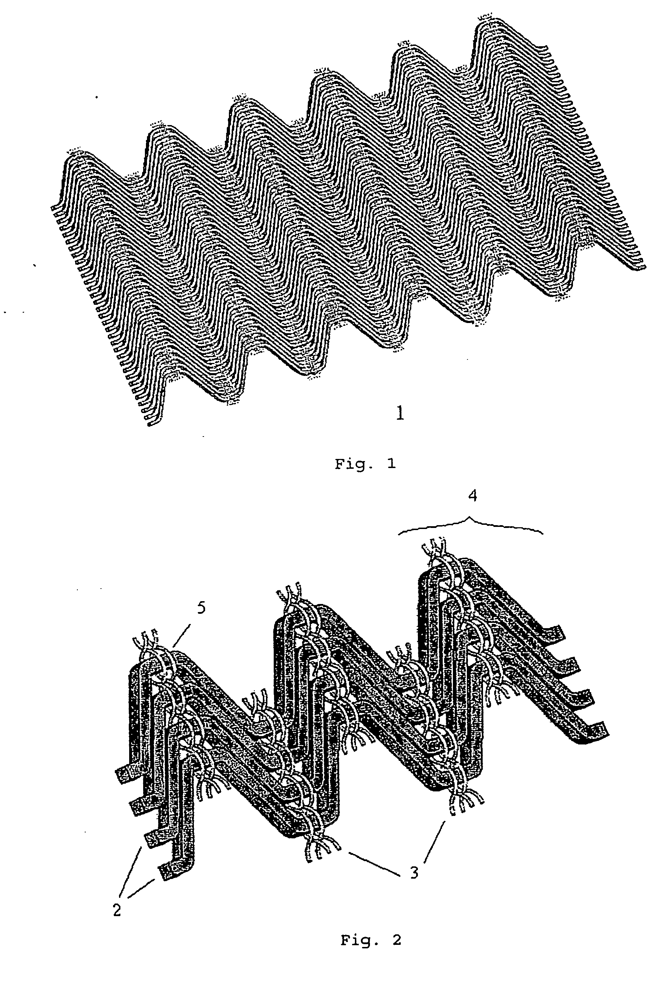

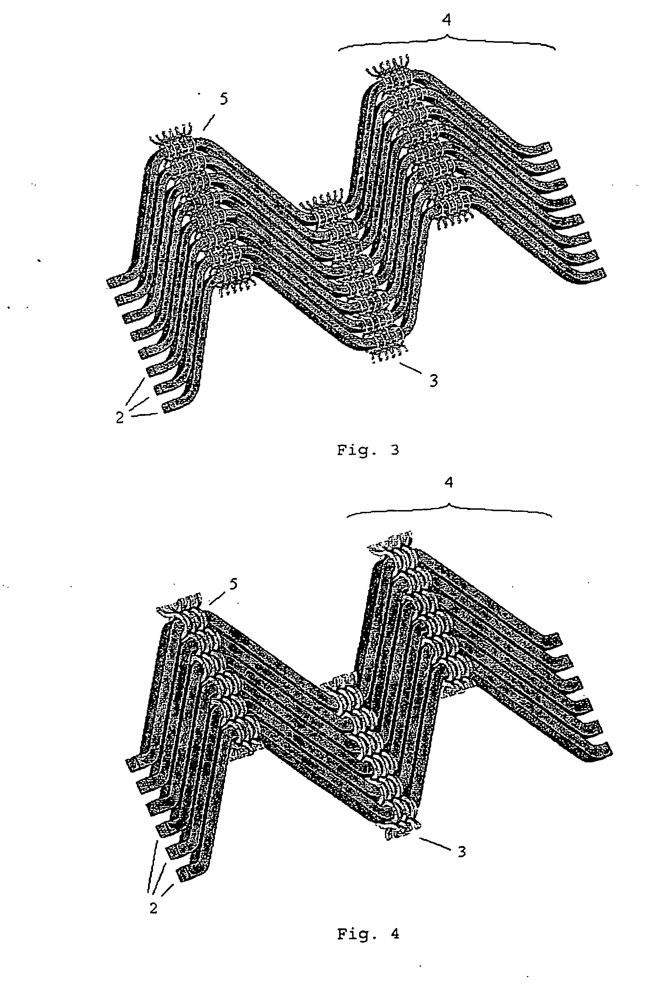

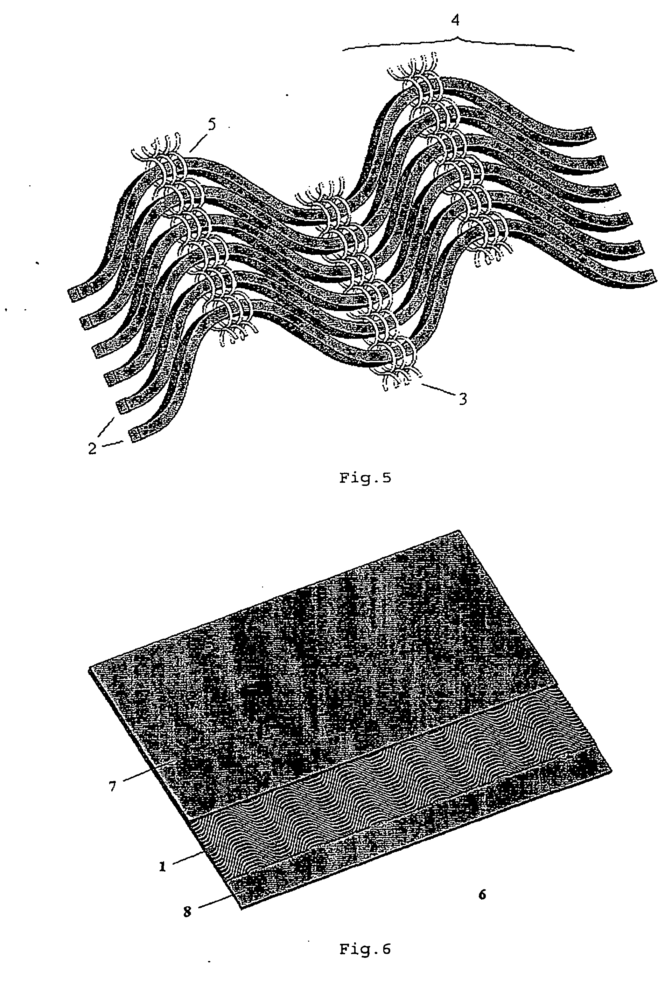

Différentes trames de nappe métallique de renfort 1 ont été réalisées et décrites dans les figures 1 à 5. La forme d'exécution préférée étant une nappe dans laquelle les fils de trame à section rectangulaire ou carrée 2 ont été pliés de façon à former une ondulation en forme de trapèzes ou de sinusoïdes 4 alignés les uns dans les autres de façon parallèle et situés dans le même plan au sein d'une trame. Transversalement, sont positionnés des fils de chaîne à section ronde, carrée ou rectangulaire 3 reliant les fils de trame 2 et passant une fois au-dessus et une fois en dessous à l'intersection 5 entre le fil de trame et le fil de chaîne, permettant ainsi de maintenir la nappe métallique.

Les fils de chaîne 3 ont de préférence une section ou un côté pouvant aller de 1 à 6 dixièmes de millimètre. Le fil de trame 2 est de préférence de section carrée ou rectangulaire et mesure entre 0,6 et 1,4 mm de côté. L'utilisation d'un fil à section carrée ou rectangulaire pour le fil de trame 2 et le fait de relier ceux-ci par du fil de chaîne 3 reliant lesdits trapèzes chaque fois aux sommets de l'ondulation permet d'obtenir une très grande souplesse de la nappe ce qui la rend utilisable également dans le domaine des housses de siège. Les différentes ondulations trapézoïdales ou sinusoïdales peuvent être plus ou moins rapprochées dans un même plan en fonction des caractéristiques que l'on désire obtenir (voir figures 1 à 5).

Les métaux utilisés pour réaliser les nappes métalliques de renfort de la présente invention sont évidemment fonction de l'utilisation finale et surtout de la valeur ajoutée du produit. Pour les produits tels que les bâches de camion ou les housses de siège, on utilisera plutôt l'acier, l'acier galvanisé ou l'acier inoxydable. Pour des applications haut de gamme tels que les gilets de protection contre les balles ou l'arme blanche, on pourra envisager l'utilisation de métaux tels que l'aluminium ou le titane pour leurs caractéristiques de résistance mécanique et de légèreté.

Différents moyens pour intégrer cette nappe métallique de renfort sont possibles. On peut avoir recours à la lamination de celle-ci sur des couches plastiques éventuellement elles-mêmes renforcées par d'autres structures. La nappe métallique de renfort peut également constituer l'âme d'un élément sandwich avec de part et d'autre des couches textiles, de films ou de mousses plastiques assemblées par différents moyens bien connus de l'homme de métier.

Un mode d'exécution préféré de la présente invention étant un complexe multicouche 6 comprenant une première couche de PVC 7 ainsi qu'une seconde couche de PVC 8 entre lesquelles la nappe métallique de renfort est laminée en sandwich. Les deux feuilles de PVC 7 et 8 étant chauffées pour se souder entre elles au travers de ladite nappe. Un tel complexe multicouche 6, comprenant les deux feuilles de PVC 7 et 8 entre lesquelles la nappe métallique de renfort 1 a été soudée, peut alors être collée sur la face interne d'une bâche 9 par une résine adhésive 10 spécialement conçue à cet effet, par exemple une résine de polyuréthane. L'ensemble ne dépasse généralement pas une épaisseur de 1 à 2 mm.

Suite à de nombreux essais sur un complexe destiné à la réalisation d'une bâche anti-vandalisme anti-lacération et anti-effraction, on a constaté que l'ondulation en forme trapézoïdale ou sinusoïdale des fils de trame à section carrée ou rectangulaire 2 reliés entre eux par des fils de chaîne passant alternativement en dessous et au-dessus dudit fil de trame au point d'intersection 5, confère une résistance aux coups d'objets tranchants, perforants ou coupants donnés dans n'importe quel sens, même transversalement et n'engendraient pas de détérioration dudit complexe. Il est donc pratiquement impossible de traverser celui-ci par un coup dit « de poignard ».

### Légende

1. Nappe métallique de renfort
2. Fil de trame à section carrée ou rectangulaire
3. Fil de chaîne à section carrée, rectangulaire ou ronde.
4. Ondulation des fils de trame en forme trapézoïdale ou sinusoïdale.
5. Intersection entre le fil de trame et le fil de chaîne.
6. Complexe multicouche avec renfort métallique.
7. Feuille de PVC supérieure.
8. Feuille de PVC inférieure.
9. Bâche en PVC telle que renforcée à l'origine.
10. Adhésif.

## Revendications

1. Complexe multicouche (6) comprenant une nappe métallique de renfort (1) réalisée par entrelacement, comprenant un fil de trame (2) et un fil de chaîne (3) **caractérisé en ce que** le fil de trame (2) possède une section carrée ou rectangulaire et présente des ondes régulières de forme trapézoïdales (4) situées dans un même plan et **en ce que** les fils de chaîne (3) reliant les fils de trame (2) se présentent côte à côte et ont une section carrée, rectangulaire ou ronde et **en ce que** ceux-ci forment une intersection (5) avec le fil de trame (2) au sommet des ondulations en passant alternativement en dessous et au-dessus du fil de trame (2).

2. Complexe multicouche (6) selon la revendication 1 **caractérisé en ce que** le fil de trame (2) forme une ondulation en forme de sinusoïde.

3. Complexe multicouche (6) selon la revendication 1 ou 2 **caractérisé en ce que** les métaux utilisés pour les fils de chaîne et les fils de trame sont sélectionnés parmi le groupe de l'acier, l'acier inoxydable, acier galvanisé, l'aluminium et le titane.

4. Complexe multicouche (6) selon l'une quelconque des revendications 1 à 3 **caractérisé en ce que** les fils de chaîne (3) reliant les fils de trame (2) se présentent par assemblages de 2 à 10 fils côte à côte.

5. Complexe multicouche (6) selon l'une quelconque des revendications 1 à 4 **caractérisé en ce que** les fils de chaîne (3) reliant les fils de trame (2) ont un diamètre ou un côté compris entre 0.1 et 0.6 mm.

6. Complexe multicouche (6) selon l'une quelconque des revendications 1 à 5 **caractérisé en ce que** les fils de trame (2) ont un côté compris entre 0.6 et 1.4 mm.

7. Complexe multicouche (6) selon l'une quelconque des revendications 1 à 6 **caractérisé en ce que** les fils de trame (2) sont au nombre de 3 à 15 au cm et de préférence de 5 à 12 au cm.

8. Utilisation du complexe multicouche (6) selon l'une quelconque des revendications précédentes pour le renforcement de bâches en général et en particulier les bâches utilisées pour le transport international, les portes à ouverture rapide, les sièges, les housses de siège, les gilets de protection, les toits ouvrants de voitures et les tentes.

## Patentansprüche

1. Mehrschichtiger Verbundstoff (6) mit einer Metallmatte zur Verstärkung (1) aus einem Gewebe mit einem Schussfaden (2) und einem Kettfaden (3), **dadurch gekennzeichnet, dass** der Schussfaden (2) einen quadratischen oder rechteckigen Querschnitt aufweist und gleichmäßige trapezförmige Wellen (4) bildet, die auf einer Ebene liegen, und dadurch, dass die Kettfäden (3), die die Schussfäden (2) verbinden, nebeneinander liegen und einen quadratischen, rechteckigen oder runden Querschnitt aufweisen, und dadurch, dass diese einen Schnittpunkt (5) mit dem Schussfaden (2) am höchsten Punkt der Welle bilden, indem sie abwechseln unter und über dem Schussfaden (2) verlaufen.

2. Mehrschichtiger Verbundstoff (6) gemäß Anspruch 1, **dadurch gekennzeichnet, dass** der Schussfaden (2) eine sinusförmige Welle bildet.

3. Mehrschichtiger Verbundstoff (6) gemäß Anspruch 1 oder 2, **dadurch gekennzeichnet, dass** die für die Schuss- und Kettfäden verwendeten Metalle aus der Gruppe des Stahls, des rostfreien Stahls, des galvanisierten Stahls, des Aluminiums und des Titans ausgewählt wurden.

4. Mehrschichtiger Verbundstoff (6) gemäß einem der Ansprüche 1 bis 3, **dadurch gekennzeichnet, dass** die Kettfäden (3), die die Schussfäden (2) verbinden, in Verbindungen von 2 bis 10 nebeneinander liegenden Fäden vorliegen.

5. Mehrschichtiger Verbundstoff (6) gemäß einem der Ansprüche 1 bis 4, **dadurch gekennzeichnet, dass** die Kettfäden (3), die die Schussfäden (2) verbinden, einen Durchmesser oder eine Seite zwischen 0,1 bis 0,6 mm aufweisen.

6. Mehrschichtiger Verbundstoff (6) gemäß einem der Ansprüche 1 bis 5, **dadurch gekennzeichnet, dass** die Schussfäden (2) eine Seite zwischen 0,6 bis 1,4 mm aufweisen.

7. Mehrschichtiger Verbundstoff (6) gemäß einem der Ansprüche 1 bis 6, **dadurch gekennzeichnet, dass** pro cm 3 bis 15 und vorzugsweise 5 bis 12 Schussfäden (2) vorliegen.

8. Verwendung des mehrschichtigen Verbundstoffs (6) gemäß einem der vorangehenden Ansprüche zur Verstärkung von Planen im Allgemeinen und insbesondere von Planen, die für den internationalen Transport verwendet werden, für Schnelllauftore, Sitze, Sitzbezüge, Schutzwesten, Autoverdecke und Zelte.

## Claims

1. Multilayer complex (6) comprising a reinforcement metal sheet (1) made by interweaving, comprising a weft thread (2) and a warp thread (3), **characterised in that** the weft thread (2) has a square or rectangular section and has regular trapezoid undulations (4) located in the same plane, **in that** the warp threads (3) linking the weft threads (2) are arranged side by side and have a square, rectangular or circular section, and **in that** the latter form an intersection (5) with the weft thread (2) at the peak of the undulations by alternately passing under and over the weft threads (2).

2. Multilayer complex (6) according to Claim 1, **characterised in that** the weft thread (2) forms a sine curve undulation.

3. Multilayer complex (6) according to Claim 1 or Claim 2, **characterised in that** the metals used for the warp threads and the weft threads are selected from the group of steel, stainless steel, galvanised steel, aluminium and titanium.

4. Multilayer complex (6) according to any one of Claims 1 to 3, **characterised in that** the warp threads (3) linking the weft threads (2) are arranged side by side in sets of 2 to 10 threads.

5. Multilayer complex (6) according to any one of Claims 1 to 4, **characterised in that** the warp threads (3) linking the weft threads (2) have a diameter or a side of between 0.1 mm and 0.6 mm.

6. Multilayer complex (6) according to any one of Claims 1 to 5, **characterised in that** the weft threads (2) have a side of between 0.6 mm and 1.4 mm.

7. Multilayer complex (6) according to any one of Claims 1 to 6, **characterised in that** there are between 3 and 15 weft threads (2) per cm, and preferably between 5 and 12 per cm.

8. Use of the multilayer complex (6) according to any one of the preceding claims for the reinforcement of covers in general, and in particular the covers used in international transport, quick-opening doors, seats, seat covers, protection jackets, car sunroofs and tents.
